# EUROPÄISCHE PATENTSCHRIFT

(11) **EP 3 621 829 B1**
(45) Veröffentlichungstag und Bekanntmachung des Hinweises auf die Patenterteilung: **11.11.2020**
(21) Anmeldenummer: 18724511.3
(22) Anmeldetag: 08.05.2018
(51) Int. Cl.: B60G 11/27, B60G 11/30, F16F 9/04, F16J 13/02

(54) **VERWENDUNG EINER VERSCHLUSSEINRICHTUNG**
USE OF A CLOSURE DEVICE
UTILISATION D'UN DISPOSITIF DE FERMETURE

(30) Priorität: 08.05.2017 DE 102017109808
(43) Veröffentlichungstag der Anmeldung: 18.03.2020
(73) Patentinhaber: SAF-HOLLAND GmbH, 63856 Bessenbach (DE)
(72) Erfinder: FÄTH, Stefan, 63743 Aschaffenburg (DE); WALLMEIER, Stefan, 63773 Goldbach (DE); BONNESS, Kerstin, 63739 Aschaffenburg (DE)
(74) Vertreter: Müller Schupfner & Partner Patent- und Rechtsanwaltspartnerschaft mbB
(86) Internationale Anmeldenummer: PCT/EP2018/061830
(87) Internationale Veröffentlichungsnummer: WO 2018/206558

(56) Entgegenhaltungen:
- EP-A1- 2 539 603
- EP-A2- 0 864 452
- WO-A1-2012/145451
- DE-A1-102006 030 452
- DE-B- 1 151 189
- US-A- 3 109 552
- US-A- 3 266 095
- US-A- 3 365 093
- US-A- 5 326 082

## Beschreibung

Die vorliegende Erfindung betrifft eine Verschlusseinrichtung, eine Verwendung einer Verschlusseinrichtung, ein Verfahren zum Abdichten eines Fluidkanals und ein Luftfedersystem.

Luftfedersysteme sind aus dem Stand der Technik hinlänglich bekannt. Typischerweise werden sie zur Abfederung einer Fahrzeugachse oder zur Veränderung einer Niveaulage eines Fahrzeugs verwendet. Übliche Bestandteile des Luftfedersystems sind ein Kolben und ein Luftbalg, wobei der Luftbalg und der Kolben relativ zueinander verschiebbar sind. Dabei rollt der Luftbalg bei einer Ein- und Ausfederung an einer Außenfläche des Kolbens ab. Hierzu ist der Luftbalg vorzugsweise aus einem elastischen Material gefertigt, mit dem eine Faltbewegung während des Abrollens bewirkt werden kann. Eine Dämpfung wird zudem dadurch hervorgerufen, dass ein Fluid, insbesondere Luft, zwischen einem durch den Luftbalg und den Kolben breitgestellten Arbeitsraum und einer in dem Kolben ausgebildeten Kammer über einen verengten Querschnitt hin - und herströmt. Aufgrund des verengten Querschnitts und der damit verbundenen Reibung werden die eingeleiteten Schwingungen gedämpft.

Das Dämpfungsverhalten einer solchen Luftfedereinrichtung ist abhängig vom zur Verfügung stehenden Luftvolumen. Zur Erhöhung des Volumens ist es daher bekannt, den Arbeitsraum mit einem Zusatzvolumen in Form eines separaten Zusatzbehälters zu verbinden. Aus dem Stand der Technik ist - beispielsweise aus der Druckschrift DE 10 2004 011 466 A1 - ein Luftfedersystem bekannt, deren Kolben über einen Verbindungskanal mit einem Zusatzvolumenbehälter verbunden ist.

Die WO 2012 145 451 A1 offenbart eine Verschlusseinrichtung für ein Luftfedersystem, das ein Zusatzbehälter und eine an einen Lenker anbindbare Luftfedereinrichtung aufweist, wobei die Verschlusseinrichtung im verbauten Zustand einen Fluidkanal zum Gasaustausch zwischen der Luftfedereinrichtung und dem Zusatzbehälter abdichtet.

Die EP 0 864 452 A2 offenbart eine Verschlusseinrichtung für ein Luftfedersystem, welches einen Zusatzbehälter und eine an einem Lenker anbindbare innere Luftfedereinrichtung aufweist, insbesondere für ein Luftfedersystem eines Nutzfahrzeuges, wobei die Verschlusseinrichtung im verbauten Zustand einen Fluidkanal zum Gasaustausch zwischen der Luftfedereinrichtung und dem Zusatzbehälter abdichtet.

Die EP 2 539 603 A1 offenbart eine Luftfedereinrichtung nach dem Oberbegriff des Anspruchs 1 mit einem Ventil zwischen dem Tauchkolben und dem Luftbalg.

Die US 3 266 095 und US 3 365 093 zeigen keine Luftfedern, allerdings Verschluss oder Einsetzmittel zum Verschließen einer Druckkammer. Allerdings hat es sich für solche Luftfedersysteme als nachteilhaft herausgestellt, dass es bei einer Beschädigung des Zusatzbehälters durch ausströmende Luft zu einer Fehlfunktion des Luftfedersystems kommt, die sogar eine Weiterfahrt mit dem das Luftfedersystem umfassenden Fahrzeug gefährden kann.

Es ist somit eine Aufgabe der vorliegenden Erfindung eine Vorrichtung bereitzustellen, die bei einer Fehlfunktion des Luftfedersystems zumindest kurzfristig eine Weiterfahrt sicherstellen kann.

Diese Aufgabe wird gelöst durch eine Verwendung einer Verschlusseinrichtung gemäß Anspruch 1. Weitere Vorteile und Merkmale der Erfindung ergeben sich aus den Unteransprüchen sowie der Beschreibung und den beigefügten Figuren.

Erfindungsgemäß ist eine Verwendung einer erfindungsgemäßen Verschlusseinrichtung bei einer Fehlfunktion des Zusatzbehälters und/oder der Luftfedereinrichtung vorgesehen. Insbesondere handelt es sich bei einer Fehlfunktion um ein Ausweichen der Luft aus dem Zusatzbehälter.

Erfindungsgemäß ist dabei ein Verschlusseinrichtung für ein Luftfedersystem vorgesehen, das einen Zusatzbehälter und eine an einen Lenker angebundene Luftfedereinrichtung aufweist, insbesondere für ein Luftfedersystem eines Nutzfahrzeugs, wobei die Verschlusseinrichtung im verbauten Zustand einen Fluidkanal zum Gasaustausch zwischen der Luftfedereinrichtung und dem Zusatzbehälter abdichtet. Mittels der Verschlusseinrichtung lässt sich die Luftfedereinrichtung insbesondere gegenüber dem Zusatzbehälter temporär abdichten, so dass ein mit dem Luftfedersystem ausgestattetes Fahrzeug zu einer Werkstatt oder einem Servicepunkt gelangen kann, wenn z. B. der Zusatzbehälter beschädigt ist, insbesondere undicht ist. Dabei dichtet die Verschlusseinrichtung die Luftfedereinrichtung derart ab, dass kein Gasaustausch zwischen der Luftfedereinrichtung und dem Zusatzbehälter möglich ist und die Luftfedereinrichtung auf ihre Grundfunktion reduziert ist, in der das Dämpfungsverhalten nicht durch ein Zusatzvolumen der Luft aus dem Zusatzbehälter beeinflusst werden kann. Insbesondere ist das Luftfedersystem für eine Fahrzeugachse vorgesehen, wobei der Lenker schwenkbar an einem Fahrzeugrahmen anordenbar ist und zur Lagerung der Fahrzeugachse bestimmt ist. Die zwischen dem Lenker und dem Fahrzeugrahmen angeordnete Luftfedereinrichtung umfasst erfindungsgemäß einen Kolben und einen Luftbalg. Dieser Luftbalg weist vorzugsweise einen elastisch deformierbaren zylinderförmigen Mantel auf, der einerseits an den Kolben, z. B. über einen Klemmring, und anderseits an den Fahrzeugrahmen gebunden ist. Bei einer Abfederbewegung wird ein von dem Kolben und dem Luftbalg eingeschlossenes Arbeitsvolumen, in dem ein Fluid, insbesondere Luft, gesammelt ist, verringert. Durch einen Querschnitt im Kolben kann ferner die Luft aus dem Arbeitsvolumen treten, wodurch sich ein Dämpfungseffekt für die Luftfeder und damit für eine Schwenkbewegung des Lenkerelements mit der gelagerten Fahrzeugachse erzielen lässt. Weiterhin ist es vorstellbar, dass die Verschlusseinrichtung am Lenker oder an dem Fahrzeugrahmen reversibel befestigbar ist, um die Verschlusseinrichtung bei Bedarf zum Abdichten der Luftfedereinrichtung verwenden zu können. Dadurch lässt sich die Verschlusseinrichtung mit Vorteil mehrfach verwenden. Insbesondere ist es vorgesehen, dass die Luftfedereinrichtung auf einer im verbauten Zustand dem Fahrzeugrahmen zugewandten Oberseite des Lenkers angebunden ist und der Zusatzbehälter ist auf der dem Fahrzeugrahmen abgewandten Unterseite des Lenkers angebunden. Weiterhin ist es vorgesehen, dass die Verschlusseinrichtung in Hinblick auf die Form des Fluidkanals angepasst ist, d. h. so dimensioniert ist, dass ein Füllen des Fluidkanals oder ein Abdecken im montierten Zustand möglich ist.

Gemäß einer weiteren Ausführungsform der vorliegenden Erfindung ist es vorgesehen, dass die Verschlusseinrichtung im verbauten Zustand in einem Schnittstellenbereich, in dem die Luftfedereinrichtung an den Lenker angebunden ist, angeordnet ist. Im Schnittstellenbereich grenzen insbesondere die Luftfedereinrichtung, der Lenker und der Zusatzbehälter aneinander an und durch den Schnittstellenbereich verläuft der Fluidkanal. Der Schnittstellenbereich ist dann mit Vorteil besonders einfach zugänglich für ein Einsetzen der Verschlusseinrichtung, da im Einsatzfall im Schnittstellenbereich nur die Luftfedereinrichtung vom Lenker gelöst werden muss und dann dem Nutzer unmittelbar der Zugang zum Fluidkanal zugänglich ist.

Zweckmäßig ist es vorgesehen, dass die Verschlusseinrichtung im verbauten Zustand am Zusatzbehälter, am Lenker und/oder an der Luftfedereinrichtung, insbesondere entlang einer parallel zu einer Längsachse des Fluidkanals verlaufenden Richtung, form- und/oder reibschlüssig fixierbar ist. Dadurch lässt sich die Verschlusseinrichtung mit Vorteil ohne zusätzliches Werkzeug einsetzen. Beispielsweise ist die Verschlusseinrichtung derart gestaltet, dass sie sich im Fluidkanal verpressen lässt oder auf einer Öffnung des Fluidkanals, insbesondere auf einem die Öffnung begrenzenden Rand, aufliegt. Es ist auch vorstellbar, dass die Verschlusseinrichtung und der Fluidkanal jeweils über Gewinde verfügen, über die die Verschlusseinrichtung an den Fluidkanal angebunden werden kann.

In einer weiteren Ausführungsform der vorliegenden Erfindung ist es vorgesehen, dass die Verschlusseinrichtung im verbauten Zustand den Fluidkanal zumindest teilweise füllt. Vorzugsweise füllt die Verschlusseinrichtung den Fluidkanal zu mehr als 50 %. Vorstellbar ist auch, dass die Verschlusseinrichtung den Fluidkanal vollständig füllt.

Erfindungsgemäß ist es vorgesehen, dass die Verschlusseinrichtung einen Bolzen umfasst, der im verbauten Zustand mit einem Ende die Luftfedereinrichtung abdichtet und mit einem anderen Ende sich am Zusatzbehälter abstützt. Ein solcher Bolzen lässt sich ohne großen Aufwand in den Fluidkanal einfügen und dessen Länge in der parallel zur Längserstreckung des Fluidkanals verlaufenden Richtung stellt sicher, dass der Bolzen nicht aus dem Fluidkanal herausrutscht. Um bei etwaigen Verlagerung des Lenkers ein Verkanten des Bolzens zu vermeiden, weist der Bolzen an seiner der Innenseite des Zusatzbehälters zugewandten Seite eine abgerundete Stirnseite auf. Weiterhin ist es vorstellbar, dass der Bolzen aus einem elastisch verformbaren Material gefertigt ist oder von diesem ummantelt wird. Dadurch lässt sich der Bolzen im verbauten Zustand mit Vorteil im Fluidkanal einklemmen bzw. verpressen.

Erfindungsgemäß ist es vorgesehen, dass die Verschlusseinrichtung derart gestaltet ist, dass sie in einem ersten Zustand in einer Schnittebene einen ersten Querschnitt und in einem zweiten Zustand einen gegenüber dem ersten Querschnitt vergrößerten zweiten Querschnitt aufweist. Dadurch lässt sich nicht nur eine besonders kompakte und damit einfach mitzuführende Verschlusseinrichtung einsetzten, sondern eine solche Verschlusseinrichtung kann zudem unabhängig von der Größe des Zusatzbehälters verwendet werden. Dadurch lässt sich eine solche Verschlussvorrichtung für verschiedene Zusatzbehälter nutzen. Hierbei ist es vorzugsweise vorgesehen, dass die Verschlusseinrichtung im ersten Zustand in den Fluidkanal eingeführt wird und dann die im Fluidkanal angeordnete Verschlusseinrichtung in den zweiten Zustand überführt wird, um die Verschlusseinrichtung zu fixieren.

Erfindungsgemäß sind ein deformierbares Füllelement und ein Fixierelement als Verschlusseinrichtung vorgesehen, wobei das Füllelement mittels des Fixierelements vom ersten Zustand in den zweiten Zustand überführbar ist. Das Fixierelement verpresst hierzu vorzugsweise das Füllelement. Z.B. handelt es sich bei dem Füllelement um ein Gummielement, das zwischen zwei zueinander verlagerbaren Teilen des Fixierelements angeordnet ist. Zur Überführung werden die verlagerbaren Teile aufeinander zugeführt, woraufhin das zwischen den verlagerbaren Teilen angeordnete Füllelement nach außen gepresst wird. Das nach außen gedrückte Füllelement wirkt dann reibschlüssig mit der Innenseite des Fluidkanals zusammen und dichtet so den Fluidkanal ab.

Erfindungsgemäß ist es vorgesehen, dass die Verschlusseinrichtung ein Abdeckelement in Form eines Pfropfen ist, das luftfedereinrichtungsseitig auf eine Öffnung des Fluidkanals zwischen der Luftfedereinrichtung und dem Zusatzbehälter anordenbar ist. Durch die luftfedereinrichtungsseitige Anordnung lässt sich ein in der Luftfedereinrichtung herrschender Überdruck dazu nutzen, sicherzustellen, dass das Abdeckelement bzw. die Kappe im Betrieb ihre abdichtende Position nicht verlässt. Vorstellbar ist auch, dass das Abdeckelement einen umlaufenden Kragen aufweist, der im verbauten Zustand auf einem die Öffnung des Fluidkanals begrenzenden Rand, aufliegt und so ein Formschluss zwischen dem Fluidkanal und dem Abdeckelement entlang einer parallel zur Längsachse des Fluidkanals verlaufenden Richtung realisiert wird.

Gemäß einer weiteren Ausführungsform des vorliegenden Erfindung ist es vorgesehen, dass die Verschlusseinrichtung ein Abdeckelement in Form eines Pfropfen, ist, das zusatzbehälterseitig auf einer Öffnung des Fluidkanals zwischen der Luftfedereinrichtung und den Zusatzbehälter anordenbar ist und mittels eines deformierbaren Füllelements fixierbar ist. Um ein Herausfallen des Abdeckelements aus dem Fluidkanal zu vermeiden, ist es vorzugsweise vorgesehen, dass das Abdeckelement mit dem Füllelement, insbesondere an der Innenseite des Fluidkanals, fixiert wird.

Unter einem Ausfall des Zusatzbehälters und/oder der Luftfedereinrichtung versteht der Fachmann beispielsweise ein Entweichen von Gas aus dem Zusatzbehälter. Weiterhin ist es bevorzugt vorgesehen, dass der Gasdruck im Zusatzbehälter überwacht, ein Nutzer des Luftfedersystems auf einen Gasdruckverlust aufmerksam gemacht und schließlich mittels der Verschlusseinrichtung der Fluidkanal verschlossen wird.

Weiterhin umfasst ein Luftfedersystem, insbesondere für ein Nutzfahrzeug:: eine Luftfedereinrichtung, ein Lenker und ein Zusatzvolumen, wobei eine Verschlusseinrichtung, insbesondere eine erfindungsgemäße Verschlusseinrichtung, einen Fluidkanal zwischen der Luftfedereinrichtung und dem Zusatzbehälter abdichtet. Der Fachmann versteht hierbei unter einem Abdichten, dass über den Fluidkanal kein Gasaustausch erfolgen kann. Dadurch wird in einer Situation, in der Gas aus dem Zusatzbehälter nach außen ausweicht, der komplette Ausfall der Luftfedereinrichtung verhindert. Insbesondere ist es vorgesehen, dass zum Verbauen der Verschlusseinrichtung die Luftfedereinrichtung oder der Zusatzbehälter vom Lenker gelöst werden und anschließend die den Fluidkanal abdichtende Verschlusseinrichtung montiert wird. Nach der Montage der Verschlusseinrichtung wird die Luftfedereinrichtung oder der Zusatzbehälter wieder am Lenker angebracht. Insbesondere ist weist die Verschlusseinrichtung einen ersten Teil und einen zweiten Teil auf, wobei die Verschlusseinrichtung über das erste Teil am Lenker, am Zusatzreservoir und/oder an der Luftfedereinrichtung befestigt ist und zum Abdichten des Fluidkanals der zweite Teil gegenüber dem ersten Teil verschwenkbar ist. Dadurch lässt sich der zweite Teil zur Überführung in den verbauten Zustand der Verschlusseinrichtung gegenüber dem ersten Teil verschwenken. Beispielsweise ist die Verschlusseinrichtung tankdeckelartig ausgestaltet und lässt sich zum Abdichten des Fluidkanals verschwenken. Es ist auch vorstellbar, dass sich der zweite Teil verschieben lässt, insbesondere schiebetürenartig. Es ist auch denkbar, dass der erste Teil eine Art Schienensystem bildet, das zur Führung des zweiten Teils vorgesehen ist, und mit dem sich der zweite Teil seitlich bzw. lateral versetzen lässt. Vorzugsweise ist der erste Teil in der Nähe bzw. unmittelbar angrenzend am Fluidkanal ausgestaltet. Ferner ist es vorstellbar, dass der erste Teil und der zweite Teil über ein Scharnierelement miteinander verbunden sind. Das Scharnierelement kann dabei auch einen deformierbaren Verbindungssteg umfassen, der im verbauten Zustand der Verschlussvorrichtung, d. h. wenn die Verschlussvorrichtung den Fluidkanal abdichtet, eine Schlaufe bildet. Die Anbindung des ersten Teils an die Verschlusseinrichtung bzw. an das Zusatzreservoir hat den Vorteil, dass das Verschlusselement unmittelbar an seinem Einsatzort auch im Normalbetrieb mitgeführt werden kann.

Vorzugsweise umfasst die Verschlusseinrichtung, insbesondere in dem Bereich, der mit dem Fluidkanal im verbauten Zustand zusammenwirkt, ein Dichtelement. Beispielsweise weist die Verschlusseinrichtung einen umlaufenden Dichtring auf. Es ist aber auch vorstellbar, dass die Verschlusseinrichtung mehrere parallel zueinander ausgerichtete Dichtringe aufweist, die umlaufend an der Außenseite des im verbauten Zustand in den Fluidkanal hineinragenden Teil der Verschlusseinrichtung angeordnet sind.

Insbesondere ist die Verschlusseinrichtung derart gestaltet, dass sie zumindest bereichsweise ihren Querschnitt ändern kann. Beispielsweise lässt sich ein Außenumfang der Verschlusseinrichtung ändern, wenn sie in den Fluidkanal hineinragt. Denkbar wäre z. B., dass die Verschlusseinrichtung eine Spreizvorrichtung umfasst, mit der sich der Querschnitt der Verschlusseinrichtung in radialer Richtung vergrößern lässt, nachdem die Verschlusseinrichtung in den Fluidkanal eingeschoben wurde. Dadurch lässt sich die Verschlusseinrichtung universell für verschiedene Fluidkanäle mit unterschiedlichen Innendurchmessern nutzen bzw. die Verschlusseinrichtung lässt sich auch noch dann nutzen, wenn der Fluidkanal leicht deformiert ist.

Weiterhin ist es vorgesehen, dass das Zusatzreservoir, das Luftfederelement und/oder der Lenker einen Befestigungsbereich umfasst, in dem die Verschlusseinrichtung im Normalbetrieb verstaut werden kann. Beispielsweise ist ein entsprechender Rücksprung in der Außenwandung des Zusatzreservoirs, des Lenkers und/oder der Luftfedereinrichtung vorgesehen. Besonders bevorzugt ist der Rücksprung zwischen der Luftfedereinrichtung und dem Lenker bzw. zwischen dem Zusatzreservoir und dem Lenker ausgebildet. Dadurch wird der Zugriff auf die Verschlusseinrichtung freigegeben, sobald die Luftfedereinrichtung bzw. das Zusatzreservoir vom Lenker gelöst wird. Gleichzeitig wird die Verschlusseinrichtung im Normalbetrieb, d. h. wenn kein Verschluss des Fluidkanals erforderlich ist, geschützt angeordnet.

Gemäß einer bevorzugten Ausführungsform der vorliegenden Erfindung ist es vorgesehen, dass das Luftfedersystem derart gestaltet ist, dass bei einer Arretierung der Luftfedereinrichtung ein Eingriffselement in ein Aufnahmebereich einführbar ist und durch eine Versatzbewegung entlang einer Versatzrichtung das Eingriffselement vom Aufnahmebereich in einen Formschlussbereich, in dem das Eingriffselement mit einem Formschlusselement entlang einer von der Versatzrichtung abweichenden Formschlussrichtung formschlüssig zusammenwirkt, überführbar ist. Insbesondere ist die Luftfedereinrichtung an den Lenker über einen Bajonett-Verschluss angebunden. Dieser erlaubt ein schnelles und unkompliziertes Lösen der Luftfedereinrichtung, um die Verschlusseinrichtung bei Bedarf anzubringen. Beispielsweise sind die Eingriffselemente als Hakenelement an der Luftfedereinrichtung und Ausnehmungen im Lenker als Aufnahmebereich vorgesehen. Insbesondere hintergreifen die Eingriffselemente im montierten Zustand einen Bereich des Lenkers, wobei dieser Bereich das Formschlusselement bildet.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden.

Es zeigt:
**Fig.1****:** ein Luftfedersystem gemäß einer ersten bevorzugten Ausführungsform der vorliegenden Erfindung
**Fig.2****:** ein Luftfedersystem gemäß einer zweiten bevorzugten Ausführungsform der vorliegenden Erfindung
**Fig.3****:** ein Luftfedersystem gemäß einer dritten bevorzugten Ausführungsform der vorliegenden Erfindung
**Fig.4****:** ein Luftfedersystem gemäß einer vierten bevorzugten Ausführungsform der vorliegenden Erfindung
**Fig. 5a und 5b****:** eine Luftfedereinrichtung und ein Lenker für ein Luftfedersystem gemäß einer fünften Ausführungsform der vorliegenden Erfindung
**Fig. 6a und 6b** das Luftfedersystem gemäß der fünften bevorzugten Ausführungsform der vorliegenden Erfindung.
**Fig. 7** einen Toleranzausgleich bei dem Luftfedersystem gemäß der fünften bevorzugten Ausführungsform der vorliegenden Erfindung.
**Fig. 8** ein Luftfedersystem gemäß einer vierten bevorzugten Ausführungsform der vorliegenden Erfindung.

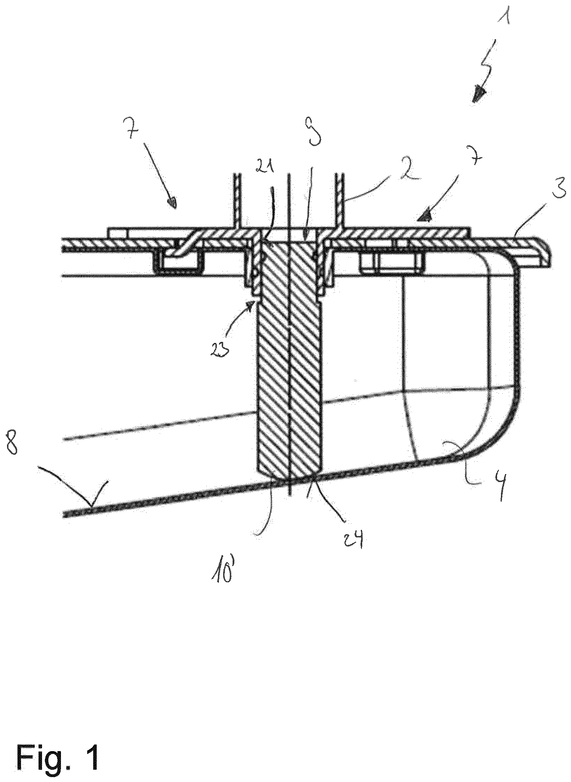

In Figur 1 ist ein Luftfedersystem 1 gemäß einer ersten bevorzugten Ausführungsform der vorliegenden Erfindung dargestellt. Insbesondere handelt es sich um ein Luftfedersystem 1, das zur Abfederung einer Radachse an einem Nutzfahrzeug, beispielsweise einem Sattelanhänger, vorgesehen ist. Wesentliche Bestandteile eines solchen Luftfedersystems 1 sind ein Lenker 3, ein Zusatzbehälter 4 und eine Luftfedereinrichtung 2. Vorzugsweise ist der Lenker 3, beispielswiese an seinem einen Ende, schwenkbar um eine Schwenkachse an eine Fahrzeugkarosserie angebunden und trägt die Radachse. Zur Dämpfung einer Translationsbewegung, beispielsweise einer Auf-und Abbewegung, der Radachse im Betrieb, ist der Lenker 3 über die Luftfedereinrichtung 2 an einem vom der Schwenkachse beabstandeten weiteren Bereich der Fahrzeugkarosserie angebunden. Neben der Abfederung einer Fahrzeugachse wird das Luftfedersystem 1 auch zur Veränderung einer Niveaulage eines Fahrzeugs verwendet. Wesentliche Bestandteile der Luftfedereinrichtung 2 sind dabei vorzugsweise ein Kolben und ein Luftbalg, wobei der Luftbalg und der Kolben relativ zueinander verschiebbar sind. Dabei rollt der Luftbalg bei einer Ein- und Ausfederung an einer Außenfläche des Kolbens ab. Hierzu ist der Luftbalg vorzugsweise aus einem elastischen Material gefertigt, mit dem eine Faltbewegung während des Abrollens bewirkt werden kann. Eine Dämpfung wird zudem dadurch hervorgerufen, dass ein Fluid, insbesondere Luft, zwischen einem durch den Luftbalg und den Kolben breitgestellten Arbeitsraum und einer in dem Kolben ausgebildeten Kammer über einen verengten Querschnitt hin - und herströmt. Aufgrund des verengten Querschnitts und der damit verbundenen Reibung werden die eingeleiteten Schwingungen gedämpft.

Das Dämpfungsverhalten einer solchen Luftfedereinrichtung 2 ist abhängig vom zur Verfügung stehenden Luftvolumen. Zur Erhöhung des Volumens ist es daher bekannt, den Arbeitsraum mit einem Zusatzbehälter 4, der ein Zusatzvolumen 4 bereitstellt, zu verbinden. Insbesondere stehen der Zusatzbehälter 4 und die Luftfedereinrichtung 2 über einen Fluidkanal 9 in fluider Verbindung, der in einem Normalbetrieb, d. h. im Falle eines funktionstüchtigen Zusatzbehälters 4 oder einer funktionstüchtigen Luftfedereinrichtung 2, einen Gasaustausch zwischen dem Zusatzbehälter und der Luftfedereinrichtung zulässt. In der dargestellten Ausführungsform ist der Lenker 3 zwischen dem Zusatzbehälter 4 und der Luftfedereinrichtung 2 angeordnet. Vorzugsweise ist die Luftfedereinrichtung 2 in einem Schnittstellenbereich 7 an den Lenker 3 angebunden, wobei im Schnittstellenbereich 7 der Fluidkanal 9 durch den Lenker 3 hindurchgreift und die Luftfedereinrichtung 2 mit dem Zusatzbehälter 4 verbindet.

Um eine Weiterfahrt mit dem Fahrzeug auch dann noch sicherstellen zu können, wenn in einem Störbetrieb der Zusatzbehälter 4 und/oder die Luftfedereinrichtung 2 defekt bzw. funktionsgestört ist, ist ein Verschlusseinrichtung 10', 10", 10"', 10"" vorgesehen, die im verbauten Zustand die Luftfedereinrichtung 2 gegenüber dem Zusatzbehälter 4 bzw. den Fluidkanal 9 abdichtet. Insbesondere blockiert die Verschlusseinrichtung 10', 10", 10'", 10"" den Gasaustausch zwischen der Luftfedereinrichtung 2 und dem Zusatzbehälter 4. In der Ausführungsform aus Figur 1 ist die Verschlusseinrichtung 10', 10", 10'", 10"" ein Bolzen 10', der im verbauten Zustand mit einem Ende den Fluidkanal 9 füllt und sich mit dem anderen Ende an einer Innenseite 8 des Zusatzbehälters 4 abstützt. Im Falle einer Fehlfunktion des Zusatzbehälters 4 und/oder der Luftfedereinrichtung 2 ist es vorgesehen, dass die Luftfedereinrichtung 2 kurzfristig vom Lenker 3 demontiert wird, mit der Verschlusseinrichtung 10', 10", 10'", 10"" bestückt und anschließend wieder mit dem Lenker 3 verbunden wird. Dabei ist der Bolzen 10' derart dimensioniert, dass er mit seinem den Fluidkanal 9 füllenden Ende passgenau, vorzugsweise presspassgenau, in den Fluidkanal 9 einführbar ist und so lang dimensioniert ist, dass er sich am Zusatzbehälter 4, insbesondere an dessen Innenseite 8, abstützen kann. Ferner ist es vorgesehen, dass der Bolzen 10' einen Absatz 23 aufweist, der verhindert, dass der Bolzen 10' versehentlich zu weit in die Luftfedereinrichtung 2 geschoben wird. Besonders bevorzugt ist es vorgesehen, dass der Bolzen 10' an seinem sich abstützenden Ende eine abgerundete Stirnseite 24 aufweist, die ein gleichmäßiges Abstützen des Bolzens 10' unabhängig von der aktuellen Ausrichtung der Innenseite 8 des Zusatzbehälters 4 erlaubt. Um ein Einsetzten des Bolzen 10' in den Fluidkanal 9 zu vereinfachen, ist es vorzugsweise vorgesehen, dass der Bolzen 10' reibschlüssig mit dem Fluidkanal 9, insbesondere einer Innenseite 21 des Fluidkanals 9, zusammenwirkt. Insbesondere ist es vorgesehen, dass die Verschlusseinrichtung 10', 10", 10'", 10"" für einen temporären Einsatz vorgesehen ist, und beispielsweise wieder leicht zu entfernen ist, sobald das Fahrzeug eine Werkstatt oder eine Servicestätte erreicht hat.

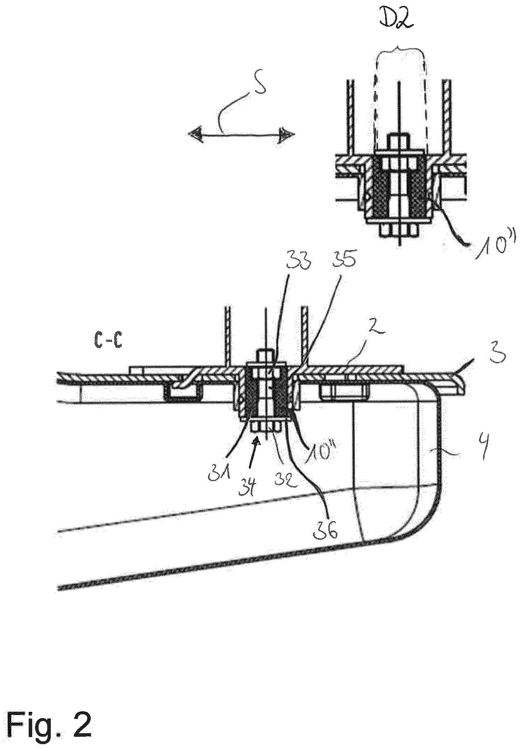

In **Figur 2** ist eine zweite bevorzugte Ausführungsform des Luftfedersystems 1 gemäß der vorliegenden Erfindung dargestellt. Dabei unterscheidet sich die Verschlusseinrichtung 10', 10", 10"', 10"" gegenüber der aus der Figur 1 dahingehend, dass statt eines Bolzens 10' ein Verschlusssystem 10" aus einem deformierbaren Füllelement 31 und einem Fixierelement 34 , das beispielsweise eine Schraube 32 und eine Mutter 33 umfasst, als Verschlusseinrichtung 10', 10", 10'", 10"" verwendet wird. Hierbei weist das deformierbare Füllelement 31, beispielsweise ein Gummielement, in einem ersten Zustand einen ersten Querschnitt auf und in einem zweiten Zustand einen gegenüber dem ersten Querschnitt vergrößerten zweiten Querschnitt D2 auf. Vorzugsweise werden der ersten Querschnitt und der zweite Querschnitt D2 in einer senkrecht zur Längsrichtung des Fluidkanals erstreckenden Schnittebene S bemessen. Vorliegend werden die Schraube 32 und die Mutter 33 derart betätigt, dass ein Abstand zwischen einem Schraubenkopf der Schraube 32 und der Mutter 33 bei der Überführung in den zweiten Zustand verkleinert wird und dabei das deformierte Füllelement 31, das einen Schraubenschaft 35 kragenförmig ummantelt, bezogen auf eine durch die Längsachse des Fluidkanals 9 vorgegebene Achse radial nach außen gedrückt wird. Infolgedessen wird durch die Zunahme des Querschnitts das deformierbare Füllelement 31 mit der Innenseite 21 des Fluidkanals 9 verklemmt und dichtet so die Luftfedereinrichtung 2 gegenüber dem Zusatzbehälter 4 ab. Hierbei ist die Verschlusseinrichtung 10', 10", 10'", 10"" über das deformierbare Füllelement 31 am Fluidkanals 9 der Luftfedereinrichtung 2 fixiert. Um das Anbringen der Verschlusseinrichtung 10', 10", 10'", 10"" zu vereinfachen, ist eine Unterlegscheibe 36 vorgesehen, deren Durchmesser in der Schnittebene S größer ist als ein Innendurchmesser des Fluidkanals 9, so dass die Verschlusseinrichtung 10', 10", 10'", 10"" bei der Montage mit Vorteil über die Unterlegscheibe 36 abgestützt werden kann.

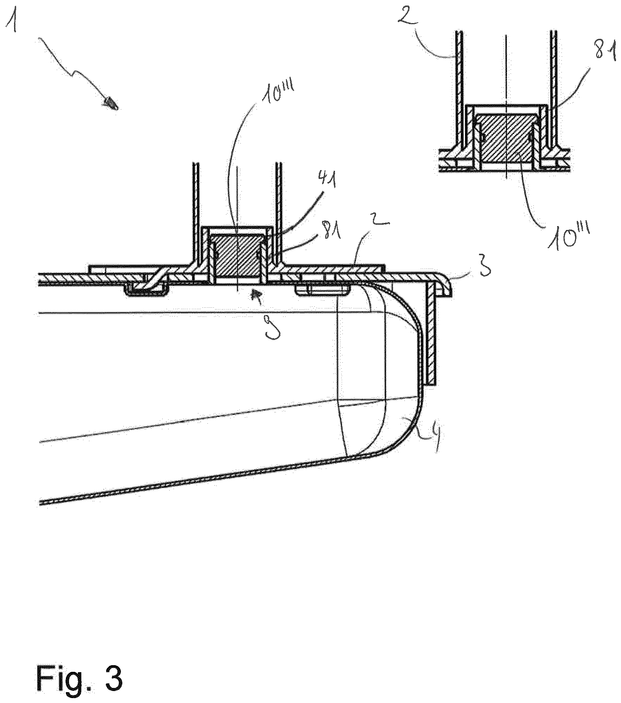

In Figur 3 ist ein Luftfedersystem 1 gemäß einer dritten bevorzugten Ausführungsform der vorliegenden Erfindung dargestellt. In dieser Ausführungsform umfasst die Verschlusseinrichtung 10', 10", 10'", 10"" einen Pfropfen, der luftfedereinrichtungsseitig den Fluidkanal 9 verschließt. Hierzu umfasst der Pfropfen erfindungsgemäß einen umlaufenden Kragen 41, dessen Durchmesser in der Schnittebene S größer ist als der Innendurchmesser des Fluidkanals 9. Dieser Kragen liegt im verbauten Zustand erfindungsgemäß auf einem Rand 81 des Fluidkanals 9 auf, wobei der Rand 81 eine Öffnung des Fluidkanals 9 luftfedereinrichtungsseitig festlegt. Durch den in der Luftfedereinrichtung 2 herrschenden Überdruck wird der erfindungsgemäße Pfropfen mit Vorteil in seiner Position an der Öffnung zum Fluidkanal 9 fixiert und dichtet diesen so ab.

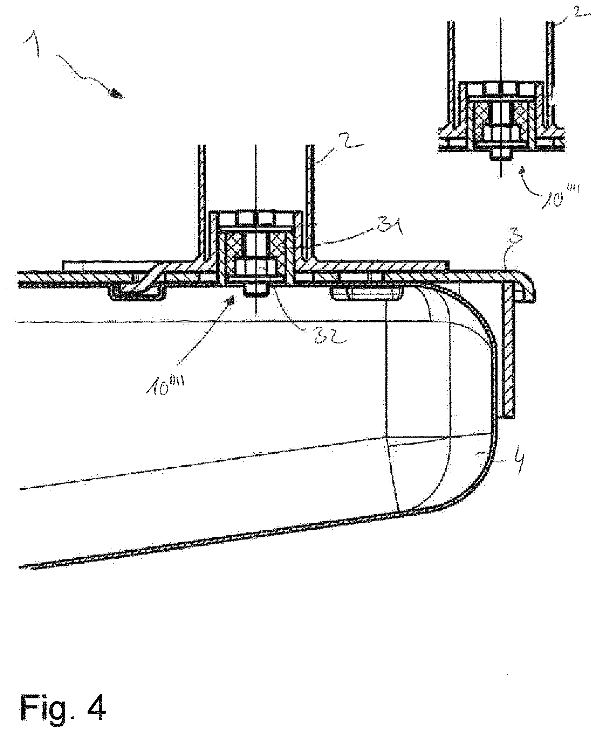

In Figur 4 ist ein Luftfedersystem 1 gemäß einer zum Stand der Technik gehörenden Ausführungsform der vorliegenden Erfindung dargestellt. Wie in der Ausführungsform aus Figur 3 handelt es sich hierbei bei der Verschlusseinrichtung 10', 10", 10"', 10"" um eine weitere Verschlusskappe 10"", die im verbauten Zustand beispielsweise innerhalb des Fluidkanals 9 angeordnet ist. Im Gegensatz zu der Ausführungsform aus der Figur 3 ist die hier dargestellte weitere Verschlusskappe 10"" zusatzbehälterseitig angeordnet. Um ein Herausrutschen bzw. Herauspressen aus dem Fluidkanal 9 zu verhindern, ist ein zusätzlicher Fixiermechanismus, wie er in der Ausführungsform aus Figur 2 beschrieben ist, vorgesehen.

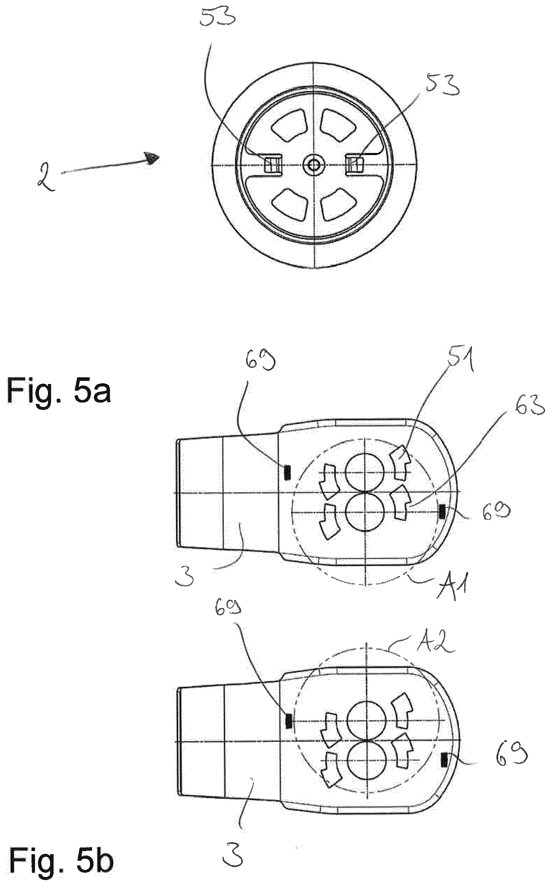

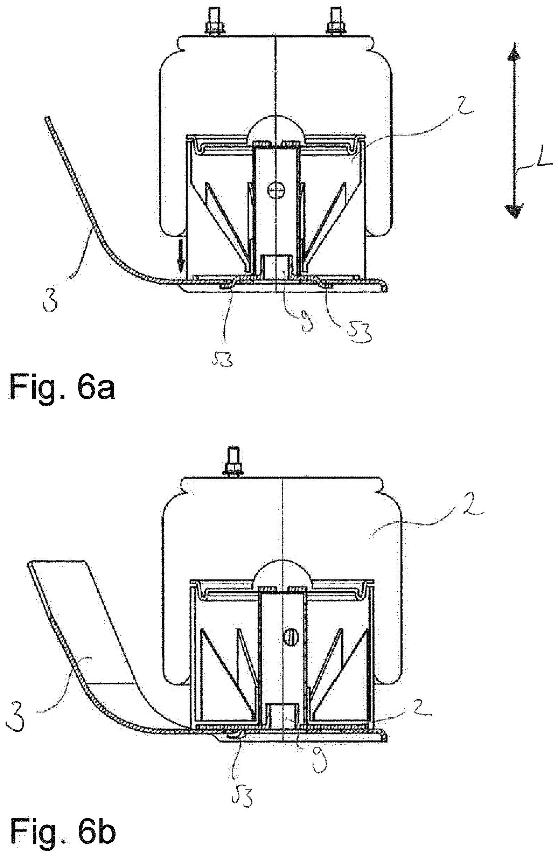

In den Figuren 5a und 5b ist ein Luftfedersystem 1 gemäß einer fünften bevorzugten Ausführungsform vorgesehen, wobei in Figur 5a eine Draufsicht auf eine Luftfedereinrichtung 2 und in Figur 5b eine Draufsichten auf einen Lenker 3 dargestellt sind. Insbesondere ist es bei dem dargestellten Luftfedersystem 1 vorgesehen, dass die Luftfedereinrichtung 2 und der Lenker 3 über einen Bajonettverschluss miteinander verbunden sind. Hierzu umfasst die Luftfedereinrichtung 2 an ihrer Stirnseite Hakenelemente 53, die vorzugsweise bezogen auf eine durch die Längserstreckung der Luftfedereinrichtung 2 vorgegebenen Luftfedereinrichtungsachse L radial nach außen abstehen und höhenversetzt zur Anlagefläche, an der die Luftfedereinrichtung 2 auf dem Lenker 3 aufliegt, verlaufen. Dadurch können die Hakenelement 53 durch entsprechende Aussparungen im Lenker hindurchgreifen. Ist der Lenker 3 derart ausgestaltet, dass ein durch die Aussparung festgelegter Aufnahmebereich 51 und ein Formschussbereich 63 bereitgestellt werden und die Hakenelemente 53 in den Aufnahmebereich 51 durch eine Bewegung entlang der Luftfedereinrichtungsachse L aufgenommen werden kann und anschließend durch eine Verdrehen der Luftfedereinrichtung 2 bzw. der Hakenelemente 53 die Hakenelemente 53 in den Formschlussbereich 63 überführt werden, in dem die Hakenelemente 53 mit dem Formschlussbereich 63 des Lenkers 3 entlang einer parallel zur Luftfedereinrichtungsachse L verlaufenden Richtung formschlüssig zusammenwirken. Das Aufsetzen der Luftfedereinrichtung 2 auf den Lenker 3 mit einer Bewegung entlang der Luftfedereinrichtungsachse L (Figur 6a) und das anschließenden Verdrehen des Luftfedereinrichtung 2 gegenüber dem Lenker 3 (Figur 6b) ist in den **Figuren 6a und 6b** angedeutet. Wie der Figur 5 weiterhin zu entnehmen ist, ist es bevorzugt vorgesehen, dass der Lenker 3 ein ersten Anschluss A1 und einen zweiten Anschluss A2 für die Hakenelemente 53 bereitstellt. Dadurch ist es in vorteilhafter Weise möglich, die Luftfedereinrichtung 2 in zwei zueinander versetzten Ausrichtungen an den Lenker 3 abzubinden. Vorzugsweise lassen sich dann die Luftfedereinrichtungen 2 abhängig von der Fahrzeugseite, an der der Lenker 3 montiert ist, im ersten oder zweiten Anschluss fixieren. Infolgedessen können die Lenker 3 unabhängig von ihrer späteren Ausrichtung am Fahrzeug mit einem ersten Anschluss A1 und einem zweiten Anschluss A2 in einer Produktionslinie erzeugt werden.

Weiterhin ist es vorgesehen, dass die Luftfedereinrichtung 2 und der Lenker 3 Kennzeichnungen 69 umfassen, die erkennen lassen ob die Luftfedereinrichtung 2 den gewünschten angebundenen Zustand erreicht hat. Dadurch lässt sich verhindern, dass eine Luftfedereinrichtung 2, die nur aufgesetzt ist und deren Hakenelemente 53 im Aufnahmebereich 51 angeordnet sind, den Eindruck erwecken, sie seien montiert. Beispielsweise sind die Kennzeichnungen 69 entlang einer im Wesentlichen horizontal verlaufenden Linie zueinander angeordnet, wenn die Luftfedereinrichtung 2 ihren fertig montierten Zustand einnimmt.

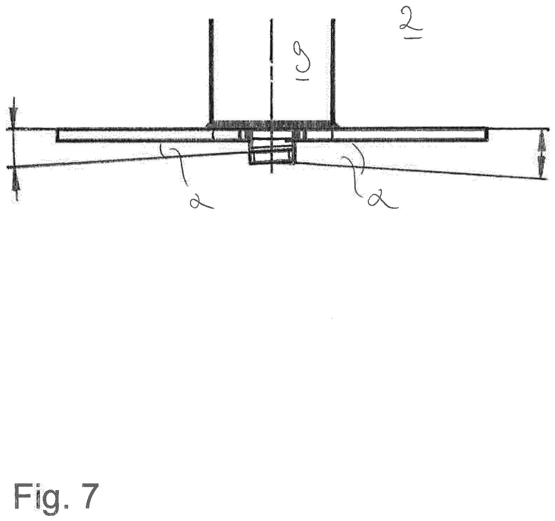

In **Figur 7** ist einen Toleranzausgleich bei dem Luftfedersystem 1 gemäß der fünften bevorzugten Ausführungsform der vorliegenden Erfindung dargestellt. Hierzu ist das Hakenelement 53 um ein Winkel α verdreht, wobei der Winkel α einen Wert zwischen 1,5° und 4,5, bevorzugt zwischen 0,8° und 2,2° und besonders bevorzugt zwischen 1,3° und 1,8 ° annimmt. Dadurch lassen sich mit Vorteil ein Toleranzausgleich und eine Klemmung sicherstellen. Insbesondere ist der in den Figuren 5a bis 7 beschrieben Bajonette-Verschluss für die Luftfedersystem aus den Figuren 1 bis 4 vorgesehen, so dass sich die Luftfedereinrichtung beim Einsetzen der Verschlusseinrichtung möglichst leicht und schnell vom Lenker entfernen lässt.

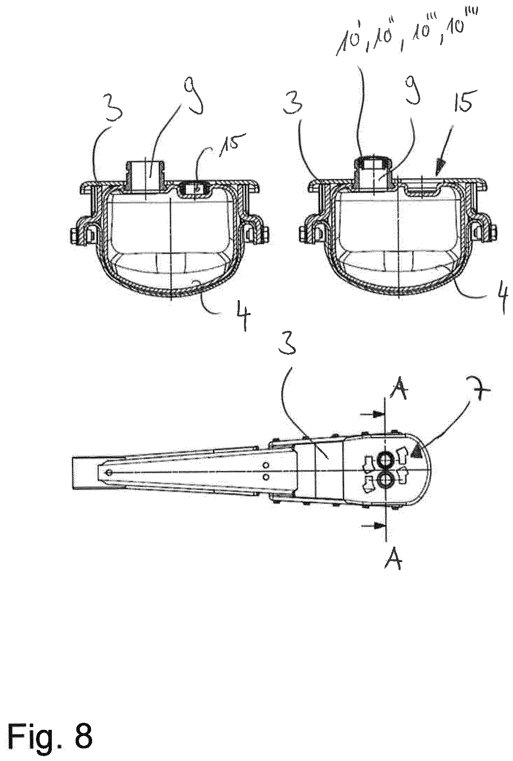

In **Figur 8** ist ein Luftfedersystem 1 gemäß einer vierten bevorzugten Ausführungsform der vorliegenden Erfindung dargestellt. Dabei ist in der unteren Hälfte der Figur 8 eine Draufsicht auf den Lenker 3 illustriert, während die obere Hälfte zwei Schnittansichten entlang einer A-A-Line im Schnittstellenbereich 7 darstellt. Insbesondere ist es vorgesehen, dass der Lenker 3 und/oder der Zusatzbehälter 4 einen Rücksprung 15, vorzugsweise einen muldenförmigen Rücksprung 15, umfasst, vorzugsweise auf der einem Fahrzeugrahmen zugewandten Seite des Lenkers 3 bzw. des Zusatzbehälters 4. Dieser Rücksprung 15 dient der Ablage bzw. Zwischenlagerung der Verschlussvorrichtung 10', 10", 10"', 10"", so dass die Verschlussvorrichtung 10', 10", 10'", 10"" leicht zugänglich und griffbereit am Lenker 3 zur Verfügung steht, wenn ein Abdichten des Fluidkanals 9 erforderlich ist. Dabei zeigt die linke Schnittansicht in Figur 8 die Verschlussvorrichtung10', 10", 10'", 10"", wenn sie im Rücksprung 15 zwischengelagert wird, während in der rechten Schnittansicht die Verschlussrichtung 10', 10", 10'", 10"" den Fluidkanal 9 abdichtet. Dabei ist es vorzugsweise vorgesehen, dass die Tiefe des Rücksprungs 15 derart gewählt ist, dass die zwischengelagerte Verschlussvorrichtung 10', 10", 10'", 10"" gegenüber dem Lenker 3 vorsteht, um das Greifen der Verschlussvorrichtung 10', 10", 10'", 10"" zu vereinfachen.

### Bezugszeichen:

- 1: Luftfedersystem
- 2: Luftfedereinrichtung
- 3: Lenker
- 4: Zusatzbehälter
- 7: Schnittstellenbereich
- 8: Innenseite des Zusatzbehälters
- 9: Fluidkanal
- 10',: Bolzen
- 10": Verschlusssystem
- 10"': Verschlusskappe
- 10"": weitere Verschlusskappe
- 15: Rücksprung
- 21: Innenseite des Fluidkanal
- 23: Absatz
- 24: abgerundete Stirnseite
- 31: Füllelement
- 32: Schraube
- 33: Mutter
- 34: Fixierelement
- 35: Schraubenschaft
- 36: Unterlegscheibe
- 41: Kragen
- 51: Aufnahmebereich
- 53: Hakenelement
- 63: Formschlussbereich
- 69: Kennzeichnung
- 81: Rand
- D2: zweiter Querschnitt
- S: Schnittebene
- L: Luftfedereinrichtungsachse

## Patentansprüche

1. Verwendung einer Verschlusseinrichtung (10', 10", 10"', 10"") mit einem Luftfedersystem (1), das einen Zusatzbehälter (4) und eine an einen Lenker (3) angebundene Luftfedereinrichtung (2) aufweist, bei einer Fehlfunktion des Zusatzbehälters (4) und/oder der Luftfedereinrichtung (2), wobei die zwischen dem Lenker (3) und dem Fahrzeugrahmen angeordnete Luftfedereinrichtung (2) einen Kolben und einen Luftbalg aufweist, wobei die Verschlusseinrichtung (10', 10", 10'", 10"") im verbauten Zustand einen Fluidkanal (9) zum Gasaustausch zwischen der Luftfedereinrichtung (2) und dem Zusatzbehälter (4) abdichtet, **dadurch gekennzeichnet, dass** die Verschlusseinrichtung (10', 10", 10'", 10"")
- einen Bolzen (10') umfasst, der im verbauten Zustand mit einem Ende die Luftfedereinrichtung (2) abdichtet und mit einem anderen Ende sich am Zusatzbehälter (4) abstützt oder
- derart gestaltet ist, dass sie in einem ersten Zustand in einer Schnittebene einen ersten Querschnitt und in einem zweiten Zustand einen gegenüber dem ersten Querschnitt vergrößerten zweiten Querschnitt (D2) aufweist und ein deformierbares Füllelement (31) und ein Fixierelement (32, 33) umfasst, wobei das Füllelement (31) mittels des Fixierelements (32, 33) vom ersten Zustand in den zweiten Zustand überführt wird oder
- ein Abdeckelement in Form eines Pfropfens (10'"), ist, wobei der Pfropfen (10'") luftfederseitig den Fluidkanal verschließt, wobei der Pfropfen (10'") einen umlaufenden Kragen (41) aufweist, dessen Durchmesser in einer Schnittebene (S) größer ist als ein Innendurchmesser des Fluidkanals (9), wobei der Kragen (41) im verbauten Zustand auf einem Rand (81) des Fluidkanals (9) aufliegt, wobei der Rand (81) eine Öffnung des Fluidkanals (9) luftfedereinrichtungsseitig festlegt und wobei ein in der Luftfedereinrichtung (2) herrschender Überdruck den Pfropfen (10'") in seiner Position an der Öffnung zum Fluidkanal (9) fixiert und diesen abdichtet.

2. Verwendung gemäß Anspruch 1, wobei die Verschlusseinrichtung (10', 10", 10'", 10"") im verbauten Zustand in einem Schnittstellenbereich (7), in dem die Luftfedereinrichtung (3) an den Lenker (3) angebunden ist, angeordnet ist.

3. Verwendung gemäß einem der vorhergehenden Ansprüche, wobei die Verschlusseinrichtung (10', 10", 10'", 10"") im verbauten Zustand am Zusatzbehälter (4), am Lenker (3) und/oder an der Luftfedereinrichtung (2) form-und/oder reibschlüssig fixierbar ist.

4. Verwendung gemäß einem der vorhergehenden Ansprüche, wobei die Verschlusseinrichtung (10', 10", 10'", 10"") im verbauten Zustand den Fluidkanal (9) zumindest teilweise füllt.

5. Verwendung gemäß einem der vorhergehenden Ansprüche, wobei die Verschlusseinrichtung (10', 10", 10'", 10"") ein Abdeckelement, insbesondere eine Verschlusskappe (10"") oder ein Pfropfen (10'"), ist, das zusatzbehälterseitig auf einer Öffnung des Fluidkanals (9) zwischen der Luftfedereinrichtung (2) und den Zusatzbehälter (4) anordenbar ist und mittels eines deformierbaren Füllelements (32, 33) fixierbar ist.

6. Verwendung gemäß einem der vorhergehenden Ansprüche, wobei die Verschlusseinrichtung (10', 10", 10'", 10"") derart gestaltet ist, dass sie zumindest bereichsweise ihren Querschnitt ändern kann.

## Claims

1. The use of a closure device (10', 10", 10"', 10"") with an air spring system (1), which has an auxiliary vessel (4) and an air spring device (2) attached to a link (3), in the event of a malfunction of the auxiliary vessel (4) and/or of the air spring device (2), wherein the air spring device arranged between the link and the vehicle frame comprises a piston and an air bellows, wherein the closure device (10', 10", 10"', 10""), in the installed state, seals off a fluid channel (9) for gas exchange between the air spring device (2) and the auxiliary vessel (4), **characterized in that** the closure device (10', 10", 10"', 10"")
- comprises a bolt (10') which, in the installed state, seals off the air spring device (2) by means of one end and is supported on the auxiliary vessel (4) by means of another end, or
- is designed such that, in a first state, in a section plane, it has a first cross section and, in a second state, it has a second cross section (D2) enlarged in relation to the first cross section, and comprises a deformable filling element (31) and a fixing element (32, 33), wherein the filling element (31) is transferred by means of the fixing element (32, 33) from the first state into the second state, or
- is a covering element in the form of a plug (10'"), wherein the plug (10"') closes the fluid channel at the air spring device side, wherein the plug (10"') comprises an encircling collar (41), the diameter of which in a section plane (S) is greater than an inner diameter of the fluid channel (9), wherein said collar lies, in the installed state, on an edge (81) of the fluid channel (9), wherein the edge (81) defines an opening of the fluid channel (9) at the air spring device side, and wherein owing to a positive pressure prevailing in the air spring device (2), the plug (10'") is fixed in its position at the opening to the fluid channel (9) and thus seals off the latter.

2. The use as claimed in claim 1, wherein the closure device (10', 10", 10"', 10""), in the installed state, is arranged in an interface region (7), in which the air spring device (3) is attached to the link (3).

3. The use as claimed in either of the preceding claims, wherein the closure device (10', 10", 10'", 10""), in the installed state, is fixable in positively locking and/or frictionally locking fashion to the auxiliary vessel (4), to the link (3) and/or to the air spring device (2).

4. The use as claimed in any of the preceding claims, wherein the closure device (10', 10", 10'", 10""), in the installed state, at least partially fills the fluid channel (9).

5. The use as claimed in any of the preceding claims, wherein the closure device (10', 10", 10"', 10"") is a covering element, in particular a closure cap (10"") or a plug (10'"), which is arrangeable, at an auxiliary vessel side, on an opening of the fluid channel (9) between the air spring device (2) and the auxiliary vessel (4) and is fixable by means of a deformable filling element (32, 33).

6. The use as claimed in any of the preceding claims, wherein the closure device (10', 10", 10'", 10"") is designed such that it can change its cross section at least in certain regions.

## Revendications

1. Utilisation d'un dispositif de fermeture (10', 10", 10"', 10"") comportant un système de ressort pneumatique (1) qui présente un récipient supplémentaire (4) et un dispositif de ressort pneumatique (2) relié à un bras oscillant (3), lors d'un dysfonctionnement du récipient supplémentaire (4) et/ou du dispositif de ressort pneumatique (2),
dans laquelle
le dispositif de ressort pneumatique (2) disposé entre le bras oscillant (3) et le châssis du véhicule comprend un piston et un soufflet,
dans l'état monté, le dispositif de fermeture (10', 10", 10"', 10"') étanche un canal à fluide (9) pour l'échange de gaz entre le dispositif de ressort pneumatique (2) et le récipient supplémentaire (4),
**caractérisé en ce que** le dispositif de fermeture (10', 10", 10"', 10"")
- comprend un boulon (10') qui, à l'état monté, étanche le dispositif de ressort pneumatique (2) par une extrémité et s'appuie sur le récipient supplémentaire (4) par une autre extrémité, ou
- est conçu de telle sorte qu'il présente, dans un premier état, une première section transversale dans un plan de coupe et, dans un deuxième état, une deuxième section transversale (D2) qui est plus grande que la première section transversale, et
- comprend un élément de remplissage déformable (31) et un élément de fixation (32, 33), l'élément de remplissage (31) pouvant être transféré du premier état au second état au moyen de l'élément de fixation (32, 33), ou
- est un élément de recouvrement sous la forme d'un bouchon (10"'), le bouchon (10"') refermant du côté ressort pneumatique le canal à fluide,
le bouchon (10"') comprend une collerette périphérique (41) dont le diamètre dans un plan de coupe (S) est supérieur à un diamètre intérieur du canal à fluide (9),
la collerette (41) repose à l'état monté sur un bord (81) du canal à fluide (9), le bord (81) définit une ouverture du canal à fluide (9) du côté dispositif de ressort pneumatique, et
une surpression régnant dans le dispositif de ressort pneumatique (2) fixe le bouchon (10"') dans sa position sur l'ouverture vers le canal à fluide (9) et étanche ce dernier.

2. Utilisation selon la revendication 1,
dans laquelle, à l'état monté, le dispositif de fermeture (10', 10", 10"', 10"") est disposé dans une zone d'interface (7) dans laquelle le dispositif de ressort pneumatique (3) est relié au bras oscillant (3).

3. Utilisation selon l'une des revendications précédentes,
dans laquelle, à l'état monté, le dispositif de fermeture (10', 10", 10'", 10"") peut être fixé par coopération de forme et/ou de friction sur le récipient supplémentaire (4), sur le bras oscillant (3) et/ou sur le dispositif de ressort pneumatique (2).

4. Utilisation selon l'une des revendications précédentes,
dans laquelle, à l'état monté, le dispositif de fermeture (10', 10", 10'", 10"") remplit au moins partiellement le canal à fluide (9).

5. Utilisation selon l'une des revendications précédentes,
dans laquelle le dispositif de fermeture (10', 10", 10"', 10"") est un élément de recouvrement, en particulier un capuchon de fermeture (10"") ou un bouchon (10"'), qui peut être disposé du côté récipient supplémentaire sur une ouverture du canal à fluide (9) entre le dispositif de ressort pneumatique (2) et le récipient supplémentaire (4) et peut être fixé au moyen d'un élément de remplissage déformable (32, 33).

6. Utilisation selon l'une des revendications précédentes,
dans laquelle le dispositif de fermeture (10', 10", 10"', 10"") est conçu de manière à pouvoir modifier au moins localement sa section transversale.
